# EUROPEAN PATENT APPLICATION

(11) **EP 4 431 221 A1**
(43) Date of publication of application: **18.09.2024**
(21) Application number: 22893088.9
(22) Date of filing: 28.10.2022
(51) Int. Cl.: B23K 26/14, B23K 26/70

(54) **LASER WELDING NOZZLE**

(30) Priority: 11.11.2021 KR 20210154934
(71) Applicant: Samsung SDI Co., Ltd., Yongin-si, Gyeonggi-do 17084 (KR)
(72) Inventor: KIM, Jinnam, Yongin-si, Gyeonggi-do 17084 (KR); JO, Jinmyung, Yongin-si, Gyeonggi-do 17084 (KR); KANG, Kyeong-Tae, Yongin-si, Gyeonggi-do 17084 (KR); KANG, Junil, Yongin-si, Gyeonggi-do 17084 (KR); KANG, Hoon, Yongin-si, Gyeonggi-do 17084 (KR); KIM, Sunghyun, Yongin-si, Gyeonggi-do 17084 (KR); KIM, Jaeyun, Yongin-si, Gyeonggi-do 17084 (KR)
(74) Representative: Gulde & Partner
(86) International application number: PCT/KR2022/016742
(87) International publication number: WO 2023/085666

(57) **Abstract**

A laser welding nozzle includes: a beam guide member allowing a laser beam to pass therethrough and having a diameter that decreases toward a lower end thereof, with a beam discharge port formed at the lower end to have a smallest diameter; and a housing coupled to the beam guide member in such a manner that an inner surface of the housing faces an outer surface of the beam guide member to form a shielding gas line outside the beam discharge port and form a suction line connected to the beam discharge port.

## Description

### [Technical Field]

The present disclosure relates to a laser welding nozzle, and more particularly, to a laser welding nozzle capable of securing a shielding gas input balance.

### [Background Art]

Unlike primary batteries, secondary batteries (rechargeable batteries) are batteries that are repeatedly charged and discharged. Small-capacity secondary batteries are used in small, portable electronic devices such as mobile phones, laptop computers, and camcorders. High-capacity and high-density secondary batteries are used as power sources for driving motors in hybrid vehicles and electric vehicles or used for energy storage.

As an example, a secondary battery includes an electrode assembly including a positive electrode, a negative electrode, and a separator interposed between the positive electrode and the negative electrode, a case in which the electrode assembly is accommodated, and an electrode terminal electrically connected to the electrode assembly. The secondary battery is charged and discharged through electrochemical reactions between the positive electrode, the negative electrode, and an electrolyte injected into the case. The case may be cylindrical or rectangular to be suitable for the purpose of use.

Laser welding is used in the process of manufacturing secondary batteries. Although efforts have been made to resolve defects caused by formation of porosity and metallic foreign substances during laser welding for secondary batteries, but a lot of laser-spattered metallic foreign substances are still generated. The metallic foreign substances cause short current defects or voltage change (dV) defects in secondary batteries. In addition, for welding a Cu base material for forming a key hole, the welding quality has been improved by using a single beam, but stable welding quality and control of spattered metallic foreign substances are required due to the increase in thermal conductivity of the Cu base material.

### [Disclosure]

### [Technical Problem]

The present disclosure attempts to provide a laser welding nozzle capable of securing a balance of fluidity for a weld pool formed during laser welding, thereby enabling stable welding.

In addition, the present disclosure attempts to provide a laser welding nozzle capable of securing a shielding gas input balance and a shielding gas output balance, thereby removing a spattered metallic foreign substance.

### [Technical Solution]

An embodiment of the present disclosure provides a laser welding nozzle including: a beam guide member allowing a laser beam to pass therethrough and having a diameter that decreases toward a lower end thereof, with a beam discharge port formed at the lower end to have a smallest diameter; and a housing coupled to the beam guide member in such a manner that an inner surface of the housing faces an outer surface of the beam guide member to form a shielding gas line outside the beam discharge port and form a suction line connected to the beam discharge port, wherein the shielding gas line includes a plurality of branch chambers each branching into a plurality of branches along a circumferential direction near the beam discharge port and a plurality of branch injection holes extending in a radial direction from the respective branch chambers, the plurality of branch chambers being merged at an upper portion of an area between the outer surface of the beam guide member and the inner surface of the housing and connected to a shielding gas injection port, and the plurality of branch injection holes being arranged to be spaced apart from each other at intervals along a circumference outside the beam discharge port.

The shielding gas line may be divided into multiple stages downward toward the beam discharge port.

The shielding gas line may include: a first branch chamber connected to the shielding gas injection port and branching into two branches; two first branch injection holes provided on both sides in a diameter direction of the first branch chamber, respectively; second branch chambers connected to the first branch injection holes, each of the second branch chambers branching into two branches, with a total of four branches; and four second branch injection holes provided on four sides in the diameter direction of the second branch chambers, and arranged at equal intervals along the circumference.

Between the outer surface of the beam guide member and the inner surface of the housing, the first branch chamber and the second branch chambers may be formed along the circumference, and the first branch injection holes and the second branch injection holes may be formed along a slope.

The shielding gas line may further include a circular injection hole connecting the four second branch injection holes into one hole outside the beam discharge port.

The shielding gas line may be established by forming grooves on an inner surface of a conical portion of the housing, and coupling an outer surface of a conical portion of the beam guide member to the inner surface of the conical portion of the housing.

When upper and lower portions of the beam guide member and the housing coupled to each other are considered as a reference, the shielding gas line and the suction line may be provided in the conical portions, the shielding gas line may be provided on a lower side, and the suction line may be provided above the shielding gas line.

The beam guide member may further include a partition wall protruding toward an opposite side of the beam discharge port, the partition wall may partition an internal space into a central space and a peripheral space having a donut structure, and a main through hole provided in a conical portion may be connected to a suction discharge port through a suction chamber.

A plurality of main through holes may be provided to connect the peripheral space and the suction chamber to each other at equal intervals along the circumference.

The suction line may include a connection of the central space to the beam discharge port, a connection of the peripheral space to the central space through an upper end of the partition wall, and a connection of the suction chamber and the suction discharge port to the peripheral space through the main through holes.

The partition wall may further include an auxiliary through hole directly connecting the central space and the peripheral space to each other.

A plurality of auxiliary through holes may be provided at equal intervals along the circumference to connect the central space and the peripheral space to each other.

The suction line may further include an auxiliary suction line connecting the central space and the peripheral space to each other through the auxiliary through hole.

The conical portion of the beam guide member may further include an additional through hole directly connecting the central space and the suction discharge port to each other.

A plurality of additional through holes may be provided.

The suction line may further include an additional suction line connecting the central space and the suction discharge port to each other through the additional through hole.

### [Advantageous Effects]

According to an embodiment of the present disclosure, since the shielding gas line is divided by the plurality of branch chambers from the shielding gas injection port to the beam discharge port, and the branch injection holes provided in the branch chambers are arranged at equal intervals along the circumference outside the beam discharge port, it is possible to secure a shielding gas input balance, thereby removing a spattered metallic foreign substance.

According to an embodiment of the present disclosure, it is possible to secure a balance of fluidity for a weld pool formed during laser welding, thereby enabling stable welding.

### [Description of the Drawings]

FIG. 1 is a perspective view of a laser welding nozzle according to a first embodiment of the present disclosure.
FIG. 2 is an exploded perspective view of the laser welding nozzle illustrated in FIG. 1.
FIG. 3 is a cross-sectional view taken along line III-III of FIG. 1.
FIG. 4 is a cross-sectional view taken along line IV-IV of FIG. 2.
FIG. 5 is a three-dimensional perspective view illustrating a shielding gas line and a suction line established between a housing and an inner member in the laser welding nozzle of FIG. 1.
FIG. 6 is a perspective view of a laser welding nozzle according to a second embodiment of the present disclosure.
FIG. 7 is a cross-sectional view taken along line VII-VII of FIG. 6.
FIG. 8 is a perspective view illustrating a lower portion of a laser welding nozzle according to a third embodiment of the present disclosure.
FIG. 9 is a perspective view illustrating an upper portion of the laser welding nozzle of FIG. 8.
FIG. 10 is a cross-sectional view taken along line X-X of FIG. 9.

### [Mode for Invention]

Hereinafter, embodiments of the present disclosure will be described in detail with reference to the accompanying drawings so that they can be easily carried out by those having ordinary knowledge in the art to which the present disclosure pertains. However, the present disclosure may be embodied in many different forms, and is not limited to the embodiments described herein. In order to clearly describe the present disclosure in the drawings, parts irrelevant to the description are omitted, and the same or similar components are denoted by the same reference signs throughout the specification.

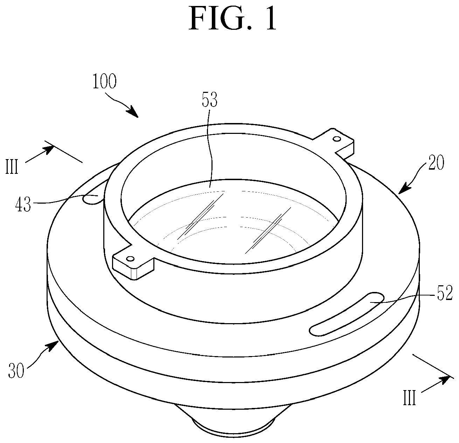

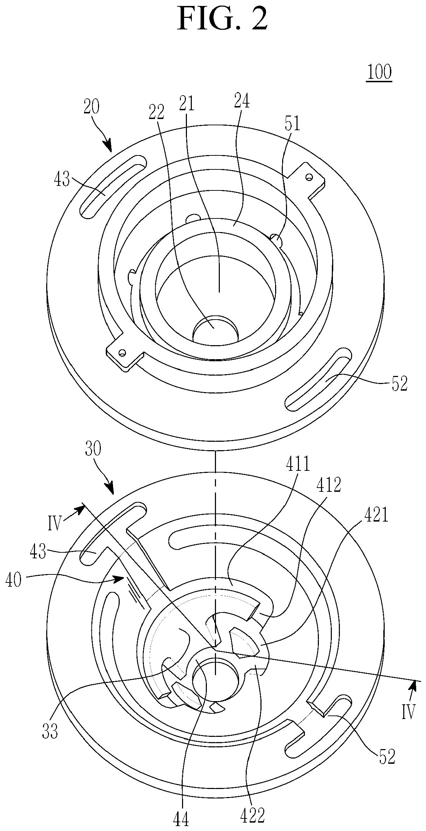

FIG. 1 is a perspective view of a laser welding nozzle according to a first embodiment of the present disclosure. FIG. 2 is an exploded perspective view of the laser welding nozzle illustrated in FIG. 1. Referring to FIGS. 1 and 2, a laser welding nozzle 100 according to the first embodiment includes a beam guide member 20 and a housing 30.

The beam guide member 20 has a conical portion 21 allowing a laser beam to pass therethrough and having a diameter that decreases toward a lower end thereof, and a beam discharge port 22 formed at the lower end of the conical portion 21 to have a smallest diameter.

The housing 30 is coupled to the beam guide member 20 in such a manner that an inner surface of the housing 30 faces an outer surface of the beam guide member 20 to form a shielding gas line 40 outside the beam discharge port 22, and form a main suction line 50 formed independently from the shielding gas line 40 and connected to the inside of the beam discharge port 22.

When viewed in a plan view, the main suction line 50 is formed at the center of the beam discharge port 22, and the shielding gas line 40 is formed outside the beam discharge port 22. Therefore, a weld pool is prevented from being oxidized by the shielding action of nitrogen used as a shielding gas, and welding steam, that is, a waste shielding gas that has been used for shielding and a spattered metallic foreign substance, are discharged to the main suction line 50.

The shielding gas line 40 supplies a shielding gas to a space established between the outer surface 23 of the beam guide member 20 and the inner surface 33 of the housing 30. The main suction line 50 sucks a waste shielding gas and a spattered metallic foreign substance and discharges the waste shielding gas and the spattered metallic foreign substance through the beam discharge port 22. To this end, the main suction line 50 is formed independently from the shielding gas line 40 not to interfere with each other.

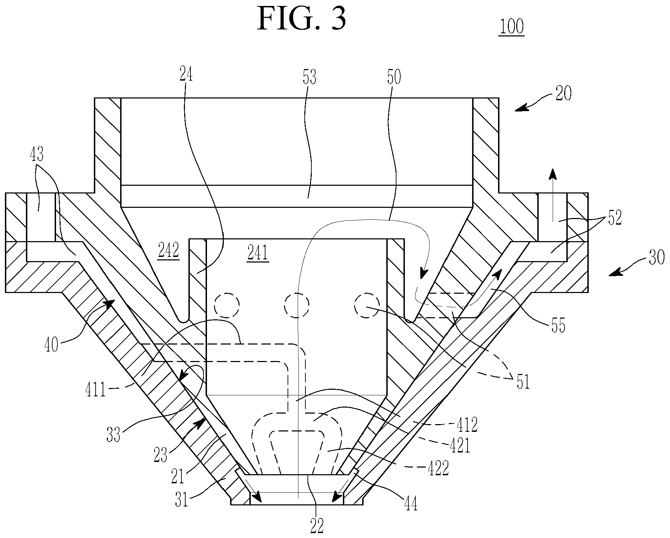

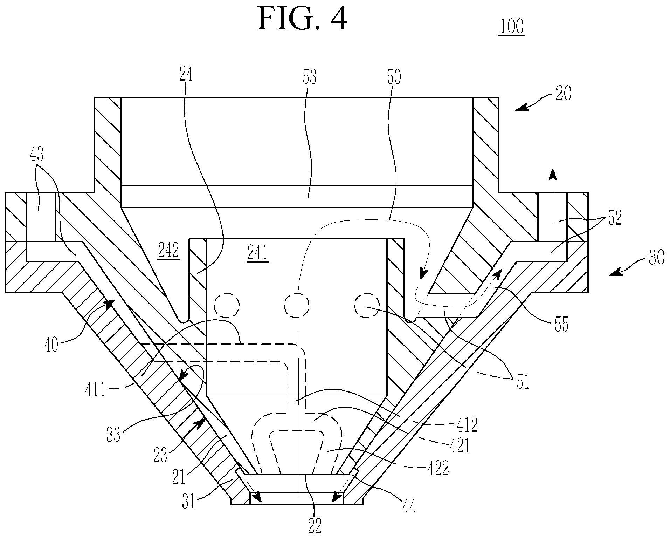

FIG. 3 is a cross-sectional view taken along line III-III of FIG. 1. FIG. 4 is a cross-sectional view taken along line IV-IV of FIG. 2. Referring to FIGS. 3 and 4, the shielding gas line 40 is merged into one branch at an upper portion of an area between the outer surface 23 of the beam guide member 20 and the inner surface 33 of the housing 30, and is connected to a shielding gas injection port 43.

The shielding gas line 40 may include branch chambers 411 and 421 each branching into a plurality of branches near the beam discharge port 22, and the branch chambers 411 and 421 may include branch injection holes 412 and 422 through which the branch chambers 411 and 421 further branch. The plurality of branch injection holes 412 and 422 may be arranged at equal intervals along a circumference outside the beam discharge port 22.

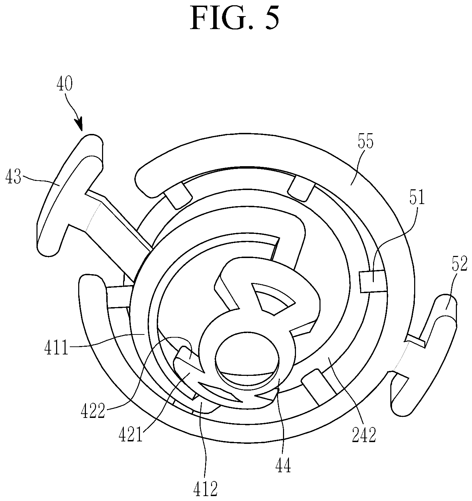

FIG. 5 is a three-dimensional perspective view illustrating a shielding gas line and a suction line established between the housing and the inner member in the laser welding nozzle of FIG. 1. Referring to FIGS. 3 to 5, the shielding gas line 40 may be divided into multiple stages downward toward the beam discharge port 22.

In an embodiment, the shielding gas line 40 is divided into two stages, and includes a first branch chamber 411 and a first branch injection hole 412, and a second branch chamber 421 and a second branch injection hole 422. A larger number of stages where each branch chamber branches into two branches can secure a better balance of a shielding gas that shields a welding area at the beam discharge port 22.

The first branch chamber 411 is connected to the shielding gas injection port 43, and branches into two branches along the circumference. Two first branch injection holes 412 are provided along the slope on both sides in a diameter direction of the first branch chamber 411 branching into two branches, respectively, that is, arranged at equal intervals along the circumference.

The second branch chambers 421 are connected to the two first branch injection holes 412, respectively, each of the second branch chambers 421 branching into two branches along the circumference, with a total of four branches. Four second branch injection holes 422 are provided along the slope on the four sides in the diameter direction of the four branches of the second branch chambers 421, respectively, that is, arranged at equal intervals along the circumference.

In the area between the outer surface 23 of the beam guide member 20 and the inner surface 33 of the housing 30, the two branched paths constituting the first branch chamber 411 have the same length along the circumference, and the two branched paths constituting the second branch chamber 421 have the same length along the circumference. The first branch injection holes 412 and the second branch injection holes 422 are formed to have the same length along the slope.

As a result, the shielding gas injected from the shielding gas injection port 43 can be uniformly distributed into the two branches of the first branch chamber 411 branching toward the opposite directions, and uniformly injected into the two first branch injection holes 412. Then, the shielding gas injected into the first branch injection holes 412 can also be uniformly distributed into the two second branch chambers 421 each branching toward the opposite directions, and uniformly injected into the four second branch injection holes 422.

The shielding gas line 40 further includes a circular injection hole 44 provided on the inner surface 33 of the conical portion 31 of the housing 30 located outside the beam discharge port 22. The circular injection hole 44 connects the four second branch injection holes 422 into one hole on the inner surface 33 of the conical portion 31, which is outside the beam discharge port 22, so that the shielding gas is uniformly discharged along the circumference outside the beam discharge port 22.

Accordingly, in the first embodiment, the four second branch injection holes 422 and the circular injection hole 44 stabilize the balance of the shielding gas discharged to the weld pool and the fluidity of the weld pool formed during laser welding.

As an example, the shielding gas line 40 is established by forming grooves, that is, the first branch chamber 411, the first branch injection holes 412, the second branch chambers 421, and the second branch injection holes 422, on the inner surface 33 of the conical portion 31 of the housing 30, and coupling the outer surface 23 of the conical portion 21 of the beam guide member 20 to the inner surface 33 of the conical portion 31 of the housing 30. In addition, although not illustrated, the shielding gas line may be established by forming grooves on the outer surface of the conical portion of the beam guide member and coupling the inner surface of the conical portion of the housing to the outer surface of the conical portion of the beam guide member.

In addition, when the upper and lower portions of the beam guide member 20 and the housing 30 coupled to each other are considered as a reference, the shielding gas line 40 and the main suction line 50 are provided in the conical portions 21 and 31, the shielding gas line 40 is provided on the lower side to stably supply a shielding gas to a weld pool, and the main suction line 50 is provided above the shielding gas line 40 to effectively discharge a waste shielding gas and a spattered metallic foreign substance without hindering the supply of the shielding gas.

Specifically, the beam guide member 20 further includes a partition wall 24 protruding toward an opposite side of the beam discharge port 22. The partition wall 24 is formed as a cylinder extending from an upper end of the conical portion 21.

Therefore, the partition wall 24 partitions an internal space of the beam guide member 20 into a central space 241 and a peripheral space 242 having a donut structure. A main through hole 51 provided in the conical portion 21 is connected to a suction discharge port 52 through a suction chamber 55.

The suction chamber 55 is formed on the inner surface of the conical portion 31 of the housing 30, and established by the outer surface of the conical portion 21 of the beam guide member 20 coupled to the inner surface of the conical portion 31 of the housing 30. The suction chamber 55 is formed separately from the shielding gas line 40.

In addition, a plurality of main through holes 51 are provided to connect the peripheral space 242 and the suction chamber 55 to each other at equal intervals along the circumference. Therefore, the main suction line 50 includes a connection of the central space 241 to the beam discharge port 22, a connection of the peripheral space 242 to the central space 241 through the upper end of the partition wall 24, and a connection of the suction chamber 55 and the suction discharge port 52 to the peripheral space 242 through the main through holes 51.

To this end, the beam guide member 20 is provided with a laser beam transmission window 53 spaced apart from the upper end of the partition wall 24. The laser beam transmission window 53 allows a waste shielding gas and a spattered metallic foreign substance to be discharged through the main suction line 50 while transmitting a laser beam.

The plurality of main through holes 51 arranged at equal intervals uniformly apply a suction force acting on the suction discharge port 52 and the main suction line 50 to the peripheral space 242 having the donut structure along the circumference, and accordingly, the suction force is uniformly applied to the central space 241 connected through the upper end of the partition wall 24 along the circumference.

As a result, the main suction line 50 is capable of discharging a waste shielding gas and a spattered metallic foreign substance without hindering the uniform shielding of the weld pool by the shielding gas uniformly discharged outside the beam discharge port 22 along the circumference.

Hereinafter, various embodiments of the present disclosure will be described. Compared to the first embodiment and the above-described embodiments, descriptions of the same configurations will be omitted and different configurations will be described.

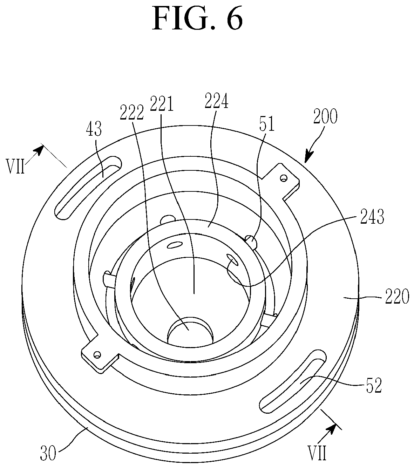

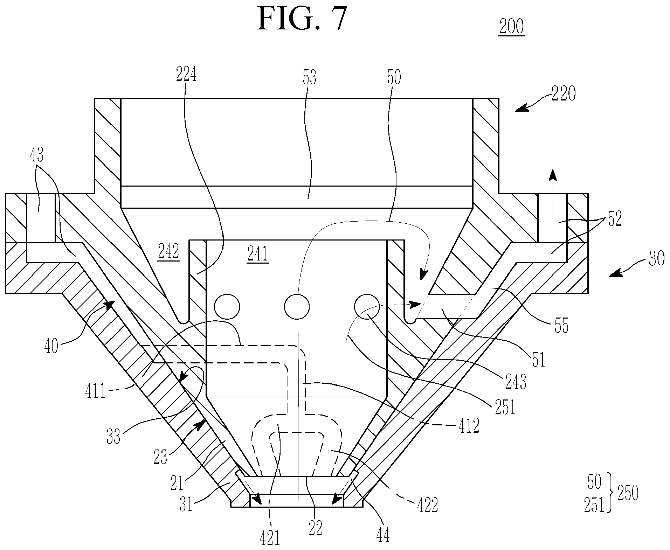

FIG. 6 is a perspective view of a laser welding nozzle according to a second embodiment of the present disclosure. FIG. 7 is a cross-sectional view taken along line VII-VII of FIG. 6. Referring to FIGS. 6 and 7, in a laser welding nozzle 200 according to the second embodiment, a partition wall 224 of a beam guide member 220 further includes an auxiliary through hole 243 that directly connects the central space 241 and the peripheral space 242 to each other.

A plurality of auxiliary through holes 243 are provided at equal intervals along the circumference to connect the central space 241 and the peripheral space 242 to each other. Therefore, a suction line 250 includes the main suction line 50 passing an upper end of the partition wall 224, that is, a connection of the central space 241 to the beam discharge port 22, a connection of the peripheral space 242 to the central space 241 through the upper end of the partition wall 224, and a connection of the suction chamber 55 and the suction discharge port 52 to the peripheral space 242 through the main through holes 51, and further includes an auxiliary suction line 251 passing the auxiliary through holes 243.

By connecting the peripheral space 242 to the central space 241 through the auxiliary through holes 243, the auxiliary suction line 251 is capable of further enhancing the suction ability in addition to the suction action of the main suction line 50 through the upper end of the partition wall 224.

The auxiliary suction line 251 and the suction line 250 including the auxiliary suction line 251 are capable of more effectively discharging a waste shielding gas and a spattered metallic foreign substance without hindering the uniform shielding of the weld pool by the shielding gas uniformly discharged outside the beam discharge port 22 along the circumference.

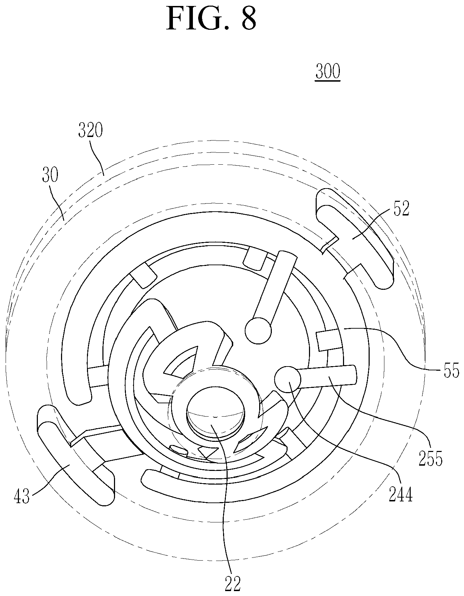

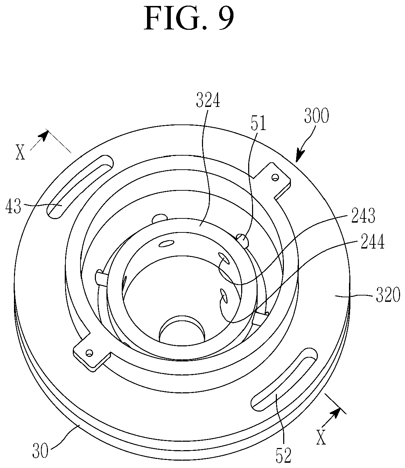

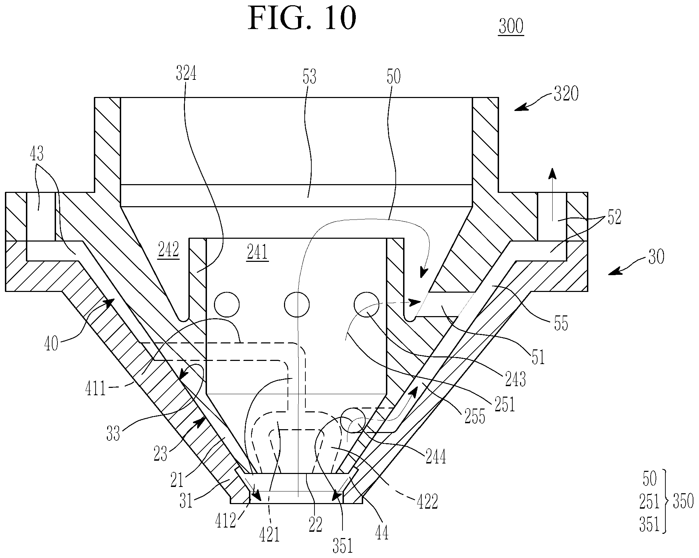

FIG. 8 is a perspective view illustrating a lower portion of a laser welding nozzle according to a third embodiment of the present disclosure. FIG. 9 is a perspective view illustrating an upper portion of the laser welding nozzle of FIG. 8. FIG. 10 is a cross-sectional view taken along line X-X of FIG. 9.

Referring to FIGS. 8 to 10, in a laser welding nozzle 300 according to the third embodiment, a conical portion 21 of a beam guide member 320 further includes an additional through hole 244 that directly connects the central space 241 and the suction discharge port 52 to each other. A plurality of additional through holes 244, that is, two additional through holes 244, are provided on one side. Although not illustrated, the additional through holes 244 may be arranged at equal intervals in the conical portion 21.

The plurality of additional through holes 244 connect the central space 241 to an extending suction chamber 255 connected to the suction chamber 55. Therefore, a suction line 350 further includes an additional suction line 351 passing the additional through holes 244, in addition to a main suction line 50 passing an upper end of a partition wall 324 and an auxiliary suction line 251 passing auxiliary through holes 243.

By connecting the extending suction chamber 255 to the central space 241 through the additional through holes 244, the additional suction line 351 is capable of further enhancing the suction ability in addition to the suction action of the main suction line 50 through the upper end of the partition wall 324 and the suction action of the auxiliary suction line 251 through the auxiliary through holes 243.

The additional suction line 351, the auxiliary suction line 251, and the suction line 350 including the additional suction line 351 and the auxiliary suction line 251 are capable of more effectively discharging a waste shielding gas and a spattered metallic foreign substance without hindering the uniform shielding of the weld pool by the shielding gas uniformly discharged outside the beam discharge port 22 along the circumference.

Although the preferred embodiments of the present disclosure have been described above, the present disclosure is not limited thereto, and various modifications may be made within the scope of the claims, the specification, and the accompanying drawings, which also fall within the scope of the present disclosure.

**- Description of symbols -**

| | | | |
|---|---|---|---|
| 20, 220, 320: | beam guide member | 21, 31: | conical portion |
| 22: | beam discharge port | 23: | outer surface |
| 24, 224, 324: | partition wall | 30: | housing |
| 33: | inner surface | 40: | shielding gas line |
| 43: | injection port | 44: | circular injection hole |
| 50: | main suction line | 51: | main through hole |
| 52: | suction discharge port | 53: | laser beam transmission window |
| 55: | suction chamber | 100, 200, 300: | welding nozzle |
| 241: | central space | 242: | peripheral space |
| 243: | auxiliary through hole | 244: | additional through hole |
| 250: | suction line | 251: | auxiliary suction line |
| 255: | extending suction chamber | 350: | suction line |
| 351: | additional suction line | | |
| 411, 421: | first and second branch chambers | | |
| 412, 422: | first and second branch injection holes | | |

## Claims

1. A laser welding nozzle comprising:
a beam guide member allowing a laser beam to pass therethrough and having a diameter that decreases toward a lower end thereof, with a beam discharge port formed at the lower end to have a smallest diameter; and
a housing coupled to the beam guide member in such a manner that an inner surface of the housing faces an outer surface of the beam guide member to form a shielding gas line outside the beam discharge port and form a suction line connected to the beam discharge port,
wherein the shielding gas line includes a plurality of branch chambers each branching into a plurality of branches along a circumferential direction near the beam discharge port and a plurality of branch injection holes extending in a radial direction from the respective branch chambers, the plurality of branch chambers being merged at an upper portion of an area between the outer surface of the beam guide member and the inner surface of the housing and connected to a shielding gas injection port, and
the plurality of branch injection holes being arranged to be spaced apart from each other at intervals along a circumference outside the beam discharge port.

2. The laser welding nozzle of claim 1, wherein
the shielding gas line is divided into multiple stages downward toward the beam discharge port.

3. The laser welding nozzle of claim 1, wherein
the shielding gas line includes:
a first branch chamber connected to the shielding gas injection port and branching into two branches;
two first branch injection holes provided on both sides in a diameter direction of the first branch chamber, respectively;
second branch chambers connected to the first branch injection holes, each of the second branch chambers branching into two branches, with a total of four branches; and
four second branch injection holes provided on four sides in the diameter direction of the second branch chambers, and arranged at equal intervals along the circumference.

4. The laser welding nozzle of claim 3, wherein
between the outer surface of the beam guide member and the inner surface of the housing,
the first branch chamber and the second branch chambers are formed along the circumference, and
the first branch injection holes and the second branch injection holes are formed along a slope.

5. The laser welding nozzle of claim 4, wherein
the shielding gas line further includes a circular injection hole connecting the four second branch injection holes into one hole outside the beam discharge port.

6. The laser welding nozzle of claim 1, wherein
the shielding gas line is established by forming grooves on an inner surface of a conical portion of the housing, and coupling an outer surface of a conical portion of the beam guide member to the inner surface of the conical portion of the housing.

7. The laser welding nozzle of claim 6, wherein
when upper and lower portions of the beam guide member and the housing coupled to each other are considered as a reference, the shielding gas line and the suction line are provided in the conical portions,
the shielding gas line is provided on a lower side, and
the suction line is provided above the shielding gas line.

8. The laser welding nozzle of claim 1, wherein
the beam guide member further includes a partition wall protruding toward an opposite side of the beam discharge port,
the partition wall partitions an internal space into a central space and a peripheral space having a donut structure, and
a main through hole provided in a conical portion is connected to a suction discharge port through a suction chamber.

9. The laser welding nozzle of claim 8, wherein
a plurality of main through holes are provided to connect the peripheral space and the suction chamber to each other at equal intervals along the circumference.

10. The laser welding nozzle of claim 9, wherein
the suction line includes a connection of the central space to the beam discharge port, a connection of the peripheral space to the central space through an upper end of the partition wall, and a connection of the suction chamber and the suction discharge port to the peripheral space through the main through holes.

11. The laser welding nozzle of claim 8, wherein
the partition wall further includes an auxiliary through hole directly connecting the central space and the peripheral space to each other.

12. The laser welding nozzle of claim 11, wherein
a plurality of auxiliary through holes are provided at equal intervals along the circumference to connect the central space and the peripheral space to each other.

13. The laser welding nozzle of claim 11, wherein
the suction line further includes an auxiliary suction line connecting the central space and the peripheral space to each other through the auxiliary through hole.

14. The laser welding nozzle of claim 11, wherein
the conical portion of the beam guide member further includes an additional through hole directly connecting the central space and the suction discharge port to each other.

15. The laser welding nozzle of claim 14, wherein
a plurality of additional through holes are provided.

16. The laser welding nozzle of claim 14, wherein
the suction line further includes an additional suction line connecting the central space and the suction discharge port to each other through the additional through hole.
